# EUROPÄISCHE PATENTANMELDUNG

(11) **EP 3 001 937 A1**
(43) Veröffentlichungstag der Anmeldung: **06.04.2016**
(21) Anmeldenummer: 15181788.9
(22) Anmeldetag: 20.08.2015
(51) Int. Cl.: A47J 43/04, A47J 43/07, A47J 44/00, A47J 27/00

(54) **SYSTEM AUS EINEM ELEKTRISCHEN KÜCHENGERÄT UND EINEM ZUSATZMODUL**

(30) Priorität: 21.08.2014 DE 102014112007
(71) Anmelder: Vorwerk & Co. Interholding GmbH, 42275 Wuppertal (DE)
(72) Erfinder: Lang, Torsten, 42657 Solingen (DE); Greive, Volker, 49126 Heidelberg (DE)
(74) Vertreter: Müller, Enno

(57) **Zusammenfassung**

System aus einem elektrischen Küchengerät (2) und einem an das elektrische Küchengerät (2) zum sicherem Datenaustausch anschließbaren Zusatzmodul (3), wobei das elektrische Küchengerät (2) eine Zusatzmodul-Anschlusseinrichtung (4) aufweist und das Zusatzmodul (3) eine Küchengerät-Anschlusseinrichtung (5) aufweist, dadurch gekennzeichnet, dass das Zusatzmodul (3) zusätzlich zu der Küchengerät-Anschlusseinrichtung (5) oder das Küchengerät (2) zusätzlich zu der Zusatzmodul-Anschlusseinrichtung (4) einen Sender (6) zum Aussenden eines Freischaltsignals aufweist und das elektrische Küchengerät (2) zusätzlich zu der Zusatzmodul-Anschlusseinrichtung (4) bzw. das Zusatzmodul (3) zusätzlich zu der Küchengerät -Anschlusseinrichtung (4) einen Empfänger (7) zum Empfangen des von dem Sender (6) ausgesandten Freischaltsignals, eine Auswerteinrichtung (8) zum Auswerten des vom Empfänger (7) empfangenen Freischaltsignals und eine Freischalteinrichtung (9) zum Freischalten eines über die Zusatzmodul-Anschlusseinrichtung (4) und die Küchengerät-Anschlusseinrichtung (5) ablaufenden Datenaustausches zwischen dem Zusatzmodul (3) und dem elektrischen Küchengerät (2) aufweist, wobei die Freischalteinrichtung (9) derart eingerichtet ist, dass sie den Datenaustausch nur dann freischaltet, wenn die Auswertung des vom Empfänger (7) empfangenen Freischaltsignals in der Auswerteeinrichtung (8) die Übereinstimmung des empfangenen Freischaltsignals mit einem vorbestimmten, in dem elektrischen Küchengerät (2) bzw. dem Zusatzmodul (3) hinterlegten Freischaltsignal ergeben hat.

## Beschreibung

Die Erfindung betrifft ein System aus einem elektrischen Küchengerät und einem an das elektrische Küchengerät zum Datenaustausch anschließbaren Zusatzmodul, wobei das elektrische Küchengerät eine Zusatzmodul-Anschlusseinrichtung zum Anschließen des Zusatzmoduls aufweist und das Zusatzmodul eine Küchengerät-Anschlusseinrichtung zum Anschließen an das Küchengerät aufweist.

Derartige elektrische Küchengeräte sind aus der Praxis z.B. in Form von universellen Küchenmaschinen bekannt, die neben einem mechanischen Verarbeiten von Nahrungsmitteln, z.B. mittels eines Rührwerks oder Schneidmessers, auch ein Garen der Nahrungsmittel ermöglichen. Zur Herstellung einer entsprechenden Speise sind häufig vorbestimmte Rezepte vorgesehen, die mehrere aufeinanderfolgende Rezeptschritte aufweisen. Um dem Benutzer eines derartigen elektrischen Küchengeräts das Herstellen einer Speise nach einem derartigen vorbestimmten Rezept zu ermöglichen, kann außerdem vorgesehen sein, Rezeptdaten zu den vorbestimmten Rezepten von außen her auf das elektrische Küchengerät zu übertragen. Derartige Rezeptdaten können auf einem Zusatzmodul bereitgestellt werden, das an das elektrische Küchengerät angeschlossen werden kann.

Vor diesem Hintergrund ist es die Aufgabe der Erfindung, ein derartiges System aus einem elektrischen Küchengerät und einem an das elektrischen Küchengerät zum Datenaustausch anschließbaren Zusatzmodul anzugeben, bei dem ein sicherer Datenaustausch und eine verlässliche Kommunikation zwischen dem elektrischen Küchengerät und dem Zusatzmodul gewährleistbar ist.

Diese Aufgabe wird durch den Gegenstand des Patentanspruchs 1 gelöst. Bevorzugte Weiterbildungen sind in den Unteransprüchen beschrieben.

Die Erfindung liegt daher in einem System aus einem elektrischen Küchengerät und einem an das elektrische Küchengerät zum Datenaustausch anschließbaren Zusatzmodul, wobei das elektrische Küchengerät eine Zusatzmodul-Anschlusseinrichtung zum Anschließen des Zusatzmoduls aufweist und das Zusatzmodul eine Küchengerät-Anschlusseinrichtung zum Anschließen an das Küchengerät aufweist, dadurch gekennzeichnet, dass das Zusatzmodul zusätzlich zu der Küchengerät-Anschlusseirichtung oder das Küchengerät zusätzlich zu der Zusatzmodul-Anschlusseinrichtung einen Sender zum Aussenden eines Freischaltsignals aufweist und das elektrische Küchengerät zusätzlich zu der Zusatzmodul-Anschlusseinrichtung bzw. das Zusatzmodul zusätzlich zu der Küchengerät -Anschlusseinrichtung einen Empfänger zum Empfangen des von dem Sender ausgesandten Freischaltsignals, eine Auswerteinrichtung zum Auswerten des vom Empfänger empfangenen Freischaltsignals und eine Freischalteinrichtung zum Freischalten eines über die Zusatzmodul-Anschlusseinrichtung und die Küchengerät-Anschlusseinrichtung ablaufenden Datenaustausches zwischen dem Zusatzmodul und dem elektrischen Küchengerät aufweist, wobei die Freischalteinrichtung derart eingerichtet ist, dass sie den Datenaustausch zwischen dem Zusatzmodul und dem elektrischen Küchengerät über die Zusatzmodul-Anschlusseinrichtung und die Küchengerät-Anschlusseinrichtung nur dann freischaltet, wenn die Auswertung des vom Empfänger empfangenen Freischaltsignals in der Auswerteeinrichtung die Übereinstimmung des empfangenen Freischaltsignals mit einem vorbestimmten, in dem elektrischen Küchengerät bzw. dem Zusatzmodul hinterlegten Freischaltsignal ergeben hat.

Es ist somit ein maßgeblicher Aspekt der Erfindung, dass zusätzlich zu der Küchengerät-Anschlusseinrichtung des Zusatzmoduls und der Zusatzmodul-Anschlusseinrichtung des elektrischen Küchengeräts, über die der eigentliche Datenaustausch zwischen dem Zusatzmodul und dem elektrischen Küchengerät im eigentlichen Betrieb des elektrischen Küchengeräts erfolgen soll, ein Sender und ein Empfänger vorgesehen sind, und zwar getrennt voneinander, nämlich ein Sender im Anschlussmodul und ein Empfänger im Küchengerät oder umgekehrt. Der Sender und der Empfänger ermöglichen es damit, vor dem eigentlichen Datenaustausch zwischen dem elektrischen Küchengerät und dem Zusatzmodul über die Schnittstelle Küchengerät-Anschlusseinrichtung/Zusatzmodul-Anschlusseinrichtung über eine andere Schnittstelle abzuprüfen, ob das Zusatzmodul für das elektrische Küchengerät überhaupt vorgesehen und geeignet ist bzw. ob das elektrische Küchengerät überhaupt für das Zusatzmodul vorgesehen und geeignet ist.

Ein Datenaustausch über die Schnittstelle Küchengerät-Anschlusseinrichtung/Zusatzmodul-Anschlusseinrichtung wird insofern nur dann zugelassen, nämlich durch die Freischalteinrichtung freigeschaltet, wenn der Austausch des optischen Freischaltsignals zwischen dem Sender und dem Empfänger ergeben hat, dass das Zusatzmodul tatsächlich für das elektrische Küchengerät passend ist bzw. umgekehrt, nämlich das erwartete optische Freischaltsignal gesendet und empfangen wird. Ein ganz besonderer Vorteil der Erfindung liegt damit darin, dass zwischen dem elektrischen Küchengerät und dem Zusatzmodul über die Schnittstelle Küchengerät-Anschlusseinrichtung/Zusatzmodul-Anschlusseinrichtung keine Daten übertragen werden können, insbesondere auch keine Schaddaten, bevor nicht sichergestellt worden ist, dass das Zusatzmodul für das elektrische Küchengerät geeignet ist bzw. umgekehrt.

Die Erfindung sieht also vor, dass in dem System mit den Komponenten elektrisches Küchengerät und Zusatzmodul wenigstens eine dieser Komponenten mit einem Sender und die andere Komponente mit einem Empfänger ausgestattet ist, so dass mittels des Sendens und des Empfangens eines Freischaltsignals die Eignung der Komponente mit dem Sender für die Komponente mit dem Empfänger durch letztere überprüft und festgestellt werden kann. Dabei ist es grundsätzlich ausreichend, wenn nur eine Komponente mit einem Sender versehen ist und die andere Komponente einen entsprechenden Empfänger aufweist. Gemäß einer bevorzugten Weiterbildung der Erfindung weisen jedoch beide Komponenten, also sowohl das elektrische Küchengerät als auch das Zusatzmodul, jeweils einen Sender und einen Empfänger auf, so dass in beide Richtungen überprüft werden kann, ob die jeweils andere Komponente authentisch ist, also für den Anschluss geeignet ist.

Als Freischaltsignale kommen unterschiedliche Arten von Signalen in Betracht, wie Schallsignale und Funksignale. Dementsprechend sind dann auch jeweils ein derartiger Sender und ein derartiger Empfänger vorgesehen, die solche Signale senden bzw. empfangen können. Gemäß einer bevorzugten Weiterbildung der Erfindung ist jedoch vorgesehen, dass der Sender ein optischer Sender, der Empfänger ein optischer Empfänger und das Freischaltsignal ein optisches Signal ist.

Darüber hinaus ermöglicht der Anschluss des Zusatzmoduls an das elektrische Küchengerät über die Schnittstelle Küchengerät-Anschlusseinrichtung/Zusatzmodul-Anschlusseinrichtung, dass das Zusatzmodul relativ zum elektrischen Küchengerät in geometrisch vorbestimmter Weise angeordnet werden kann. Eine derartige Anordnung kann vorzugsweise derart gewählt werden, dass in diesem Anordnungszustand das von dem optischen Sender des Zusatzmoduls ausgesandte optische Signal auf sichere und verlässliche Weise auch auf den optischen Empfänger des elektrischen Küchengeräts trifft. Insofern kann auf diese Weise eine sichere Funktionsfähigkeit des Systems gewährleistet werden.

Grundsätzlich kann der Sender des Zusatzmoduls unabhängig davon aktiv sein, ob das Zusatzmodul an das elektrische Küchengerät angeschlossen ist oder nicht. Insofern kann der Sender grundsätzlich auch dann ein Freischaltsignal aussenden, wenn das Zusatzmodul nicht an das elektrische Küchengerät angeschlossen ist. Gemäß einer bevorzugten Weiterbildung der Erfindung ist jedoch vorgesehen, dass der Sender derart eingerichtet ist, dass er nur im an das elektrische Küchengerät angeschlossenen Zustand des Zusatzmoduls aktiv ist und ein Freischaltsignal aussenden kann. Dies ist zum einen insofern vorteilhaft, als dass durch den Sender keine Energie verbraucht werden kann, wenn das Zusatzmodul nicht an das elektrische Küchengerät angeschlossen ist und somit auch potentiell gar kein Datenaustausch mit dem elektrischen Küchengerät erfolgen kann, der ja über die Schnittstelle Küchengerät-Anschlusseinrichtung/Zusatzmodul-Anschlusseinrichtung erfolgen soll.

In ähnlicher Weise kann grundsätzlich vorgesehen sein, dass der Empfänger unabhängig davon aktiv ist, ob das Zusatzmodul am elektrischen Küchengerät angeschlossen ist oder nicht. Gemäß einer bevorzugten Weiterbildung der Erfindung ist jedoch vorgesehen, dass der Empfänger derart eingerichtet ist, dass er nur im an das elektrische Küchengerät angeschlossenen Zustand des Zusatzmoduls aktiv ist und ein Freischaltsignal empfangen kann. Auch hier wird damit keine Energie durch den Betrieb des Empfängers verbraucht, wenn das Zusatzmodul nicht an das elektrische Küchengerät angeschlossen ist und somit auch potentiell gar kein Datenaustausch zwischen dem Zusatzmodul und dem elektrischen Küchengerät stattfinden kann.

Der optische Sender des Zusatzmoduls kann für das Aussenden optischer Signale in unterschiedlichen Frequenzbereichen vorgesehen sein. Insbesondere kann es sich bei dem optischen Sender des Zusatzmoduls z.B. um einen Infrarot-Sender handeln. Gemäß einer bevorzugten Weiterbildung der Erfindung ist jedoch vorgesehen, dass der optische Sender des Zusatzmoduls für das Aussenden eines optischen Signals im sichtbaren Spektralbereich ausgebildet und eingerichtet ist. Dies hat den Vorteil, dass ein Benutzer des Systems aus dem elektrischen Küchengerät und dem Zusatzmodul visuell erkennen kann, dass zwischen dem Zusatzmodul und dem elektrischen Küchengerät ein Prüfvorgang stattfindet, um den Datenaustausch über die Schnittstelle Küchengerät-Anschlusseinrichtung/Zusatzmodul-Anschlusseinrichtung freizuschalten.

Insbesondere ist es in diesem Zusammenhang ganz besonders bevorzugt, dass der optische Sender des Zusatzmoduls ein vorbestimmtes Signal aussendet, wenn die Freischalteinrichtung den Datenaustausch zwischen dem Zusatzmodul und dem elektrischen Küchengerät über die Schnittstelle Küchengerät-Anschlusseinrichtung/Zusatzmodul-Anschlusseinrichtung freigeschaltet hat. Ein entsprechendes Signal kann z.B. ein Blinken des optischen Senders in vorbestimmter Weise, der Übergang von einem Blinken in ein Dauersignal oder ein vorbestimmter Farbwechsel sein. Ist dieses Signal dem Benutzer des Systems vorab bekannt gemacht worden, kann der Benutzer damit erkennen, dass nun die Freischaltung erfolgt ist. Gemäß einer bevorzugten Weiterbildung der Erfindung gilt im Übrigen, dass der optische Sender eine LED ist.

Das optische Signal, das zum Freischalten des Datenaustausches über die Schnittstelle Küchengerät-Anschlusseinrichtung/Zusatzmodul-Anschlusseinrichtung zwischen dem optischen Sender des Zusatzmoduls und dem optischen Empfänger des elektrischen Küchengeräts ausgetauscht wird, kann unterschiedlicher Natur sein, solange das optische Signal in dem elektrischen Küchengerät eindeutig identifizierbar ist. Als besonders geeignet und damit bevorzugt hat sich jedoch eine vorbestimmte Abfolge von Lichtimpulsen in einem bestimmten Frequenzmuster, eine vorbestimmte Abfolge von Farbwechselimpulsen oder/und eine kontinuierliche Veränderung von Frequenzmustern für das optische Signal herausgestellt. Diese Abfolge von Lichtimpulsen bzw. von Farbwechselimpulsen bzw. eine allmähliche Veränderung von Frequenzmustern, wie eine allmähliche leichte Farbveränderung, bei der kontinuierlichen Veränderung von Frequenzmustern stellt damit die Kodierung dar, die abgeprüft wird, um bei Übereinstimmung mit einer im System vorab hinterlegten Kodierung die Datenübertragung über die Schnittstelle Küchengerät-Anschlusseinrichtung/Zusatzmodul-Anschlusseinrichtung freizuschalten.

Um den Sender des Zusatzmoduls mit Energie zu versorgen, gibt es unterschiedliche Möglichkeiten. Gemäß einer bevorzugten Weiterbildung der Erfindung ist in diesem Zusammenhang vorgesehen, dass das Zusatzmodul einen Energiespeicher zur elektrischen Versorgung des Senders aufweist. Ein derartiger Energiespeicher kann eine Batterie sein, z.B. eine Batterie, die in das Zusatzmodul eingelegt werden kann. Andererseits kann der Energiespeicher auch ein fest im Zusatzmodul angeordneter Akkumulator sein, der im Zusatzmodul aufgeladen werden kann. Eine derartige Aufladung kann über eine externe Vorrichtung aber auch über das elektrische Küchengerät erfolgen, wenn das Zusatzmodul an das elektrische Küchengerät über die Schnittstelle Küchengerät-Anschlusseinrichtung/Zusatzmodul-Anschlusseinrichtung angeschlossen ist.

Unabhängig davon, ob das Zusatzmodul einen Energiespeicher zur elektrischen Versorgung des Senders aufweist oder nicht, ist gemäß einer bevorzugten Weiterbildung der Erfindung vorgesehen, dass das Zusatzmodul eine Energieversorgungseinrichtung aufweist, mit der elektrische Energie von dem elektrischen Küchengerät beziehbar ist. Dies ist besonders vorteilhaft in dem Fall, in dem das Zusatzmodul keinen eigenen Energiespeicher aufweist. Eine Versorgung des Zusatzmoduls mit Energie von dem elektrischen Küchengerät ist damit vorzugsweise über die Schnittstelle Küchengerät-Anschlusseinrichtung/Zusatzmodul-Anschlusseinrichtung vorgesehen. Gemäß einer alternativen bevorzugten Weiterbildung ist jedoch vorgesehen, dass eine Energiefernübertragung durch das elektrische Küchengerät auf das Zusatzmodul erfolgt, z.B. durch Induktion.

Das Zusatzmodul kann unterschiedliche Daten bereitstellen, die auf das elektrische Küchengerät übertragen und auf diesem verwendet werden können. Gemäß einer bevorzugten Weiterbildung der Erfindung ist jedoch vorgesehen, dass das elektrische Küchengerät zur Herstellung von Speise nach vorbestimmten Rezeptdaten eingerichtet ist und auf dem Zusatzmodul derartige Rezeptdaten abgespeichert sind. Das erfindungsgemäße Abprüfen, ob das Zusatzmodul überhaupt für das elektrische Küchengerät geeignet ist, schützt bei einem derartigen System vor Fehlfunktionen oder Beschädigungen des elektrischen Küchengeräts, da ein Übertragen der auf dem Zusatzmodul abgespeicherten Rezeptdaten nur dann ermöglicht wird, wenn im Vorfeld mittels des optischen Freischaltsignals festgestellt worden ist, dass das Zusatzmodul mit seinen Rezeptdaten auch für das elektrische Küchengerät geeignet ist.

Grundsätzlich können die Rezeptdaten auf dem Zusatzmodul abgespeichert sein, wobei dem elektrischen Küchengerät beim Anschluss des Zusatzmoduls nur diese abgespeicherten Rezeptdaten zur Verfügung gestellt werden können. Gemäß einer bevorzugten Weiterbildung der Erfindung ist jedoch vorgesehen, dass das elektrische Küchengerät zur Herstellung von Speisen nach vorbestimmten Rezeptdaten eingerichtet ist und mit dem Zusatzmodul eine Verbindung zu einem externen Speicher herstellbar ist, auf dem derartige Rezeptdaten abgespeichert sind. Dies erweitert den Funktionsumfang erheblich, da keine Beschränkung auf die Daten auf dem Zusatzmodul vorliegt. Vielmehr können regelmäßig neue Daten von dem externen Speicher bezogen werden, der z.B. mittels eines über das Internet zugänglichen externen Servers bereitgestellt wird.

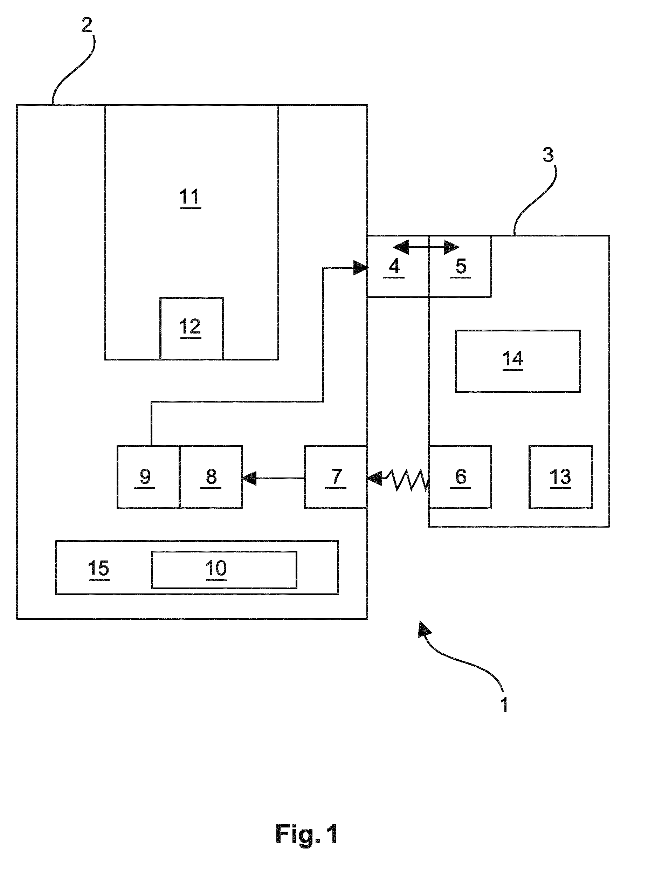

Nachfolgend wird die Erfindung unter Bezugnahme auf die Zeichnung anhand eines bevorzugten Ausführungsbeispiels weiter im Detail erläutert.

In der Zeichnung zeigt die einzige Figur schematisch ein System aus einem elektrischen Küchengerät und einem Zusatzmodul gemäß einem bevorzugten Ausführungsbeispiel der Erfindung.

Wie aus der Figur ersichtlich, ist gemäß dem vorliegend beschriebenen bevorzugten Ausführungsbeispiel der Erfindung ein System 1 aus einem elektrischen Küchengerät 2 und einem daran anschließbaren Zusatzmodul 3 vorgesehen. Die Figur zeigt den Zustand, in dem das Zusatzmodul 3 an das elektrische Küchengerät 2 angeschlossen ist. Dieser Anschluss des Zusatzmoduls 3 an das elektrische Küchengerät 2 dient dem Datenaustausch zwischen dem Zusatzmodul 3 und dem Küchengerät 2, insbesondere nämlich zur Übertragung von in einem Speicher 14 des Zusatzmoduls 3 abgelegten Rezeptdaten, die dann auf dem elektrischen Küchengerät 2 abgearbeitet werden können.

Zur Abarbeitung derartiger Rezeptdaten, also zur eigentlichen Verarbeitung von Nahrungsmitteln in dem elektrischen Küchengerät 2, weist dieses einen Verarbeitungsraum 11 mit einer Verarbeitungseinrichtung 12 auf. Diese Verarbeitungseinrichtung 12 ist vorliegend ein Schneid-/Rückwerk, mit dem Nahrungsmittel zerkleinert, verrührt und geknetet werden können.

Die zentrale Steuerung der Abläufe in dem elektrischen Küchengerät 2 werden von einer zentralen Steuereinheit 15 übernommen, die mit einem Speicher 10 versehen ist. Rezeptdaten, die auf dem elektrischen Küchengerät 2 abgearbeitet werden, können in diesem Speicher 10 hinterlegt sein bzw. auf diesen übertragen werden, z.B. von dem Zusatzmodul 3 aus.

Um nun einen derartigen Datenaustausch von Rezeptdaten zwischen dem Zusatzmodul 3 und dem elektrischen Küchengerät 2 zu ermöglichen, ist das elektrische Küchengerät 2 mit einer Zusatzmodul-Anschlusseinrichtung 4 versehen und das Zusatzmodul 3 weist eine Küchengerät-Anschlusseinrichtung 5 auf. Aus der Figur ist der Anschluss des Zusatzmoduls 3 an das elektrische Küchengerät 2 über die Schnittstelle Zusatzmodul-Anschlusseinrichtung/Küchengerät-Anschlusseinrichtung nur schematisch dargestellt. Konkret erfolgt der Anschluss über diese Schnittstelle gemäß dem vorliegend beschriebenen bevorzugten Ausführungsbeispiel der Erfindung mittels einer Steckverbindung. Die Küchengerät-Anschlusseinrichtung 5 ist als Stecker ausgebildet, der in die als Buchse ausgebildete Zusatzmodul-Anschlusseinrichtung 4 eingesteckt werden kann.

Das eigentliche Einstecken der Küchengerät-Anschlusseinrichtung 5 in die Zusatzmodul-Anschlusseinrichtung 4 erlaubt jedoch noch keinen Datenaustausch zwischen dem Zusatzmodul 3 und dem elektrischen Küchengerät 2. Dieser Datenaustausch muss erst freigeschaltet werden, wozu folgender Ablauf vorgesehen ist:
Sobald das Zusatzmodul 3 an das elektrische Küchengerät 2 angeschlossen ist, nämlich mittels seiner Küchengerät-Anschlusseinrichtung 5 in die Zusatzmodul-Anschlusseinrichtung 4 des elektrischen Küchengeräts eingesteckt ist, wird ein im Zusatzmodul 3 vorgesehener optischer Sender 6 aktiviert. Die dafür und für ein Senden erforderliche Energie erhält der optische Sender 6 von einer ebenfalls im Zusatzmodul 3 vorgesehenen elektrischen Energieversorgung 13. Der optischer Sender 6 sendet daraufhin ein vorbestimmtes optisches Signal, also das Freischaltsignal, aus, das wie in der Figur mittels eines Pfeils dargestellt, auf einen im elektrischen Küchengerät 2 vorgesehenen optischen Empfänger 7 ausgerichtet ist. Das von dem optischen Empfänger 7 im elektrischen Küchengerät 2 empfangene optische Signal wird dann im elektrischen Küchengerät 2 an eine Auswerteeinrichtung 8 weitergegeben. In der Auswerteeinrichtung 8 erfolgt eine Auswertung des vom optischen Empfänger 7 empfangenen Signals dahin, ob dieses mit einem in dem elektrischen Küchengerät 2, nämlich im Speicher 10 der zentralen Steuereinheit 15, abgelegten vorbestimmten Signal übereinstimmt. Ist dies der Fall, erfolgt automatisch eine Freischaltung des Datenaustausches über die Schnittstelle Küchengerät-Anschlusseinrichtung/Zusatzmodul-Anschlusseinrichtung mittels einer Freischalteinrichtung 9.

Damit wird sichergestellt, dass vom Zusatzmodul 3 über die Schnittstelle Küchengerät-Anschlusseinrichtung/Zusatzmodul-Anschlusseinrichtung erst dann Daten an das elektrische Küchengerät 2 übertragen werden können, wenn festgestellt worden ist, dass das Zusatzmodul 3 auch für das elektrische Küchengerät 2 vorgesehen ist. Somit wird vermieden, dass dem elektrischen Küchengerät 2 derartige Rezeptdaten zugeführt werden, die aufgrund ihrer mangelnden Eignung für das elektrische Küchengerät 2 dort Schaden anrichten könnten.

Als optisches Signal, das zwischen dem optischen Sender 6 und dem optischen Empfänger 7 zur Freischaltung des Zusatzmoduls 3 als Freischaltsignal ausgetauscht wird, ist eine vorbestimmte Abfolge von roten, also für einen Benutzer sichtbaren Lichtimpulsen in einem bestimmten Frequenzmuster vorgesehen. Das bedeutet, dass der Benutzer während des Aussendens dieses optischen Freischaltsignals aufgrund eines roten Blinkens des optischen Senders 6 erkennen kann, dass die Freischalteprozedur noch im Gange ist. Ist die Freischaltung des Zusatzmoduls 3 dann tatsächlich erfolgt, wechselt die Farbe des optischen Signals, das vom optischen Sender 6 ausgesandt wird, auf ein kontinuierliches blaues Freischaltsignal. Dieses blaue Freischaltsignal hat für den optischen Empfänger 7 und die in dem elektrischen Küchengerät 2 nachgelagerten Einrichtungen keine Bedeutung sondern dient nur dazu, dem Benutzer anzuzeigen, dass die Freischaltung erfolgt ist und der Datenaustausch zwischen dem elektrischen Küchengerät 2 und dem Zusatzmodul 3 über die Schnittstelle Küchengerät-Anschlusseinrichtung/Zusatzmodul-Anschlusseinrichtung ab sofort zur Verfügung steht.

### Bezugszeichenliste

- System: 1
- Elektrisches Küchengerät: 2
- Zusatzmodul: 3
- Zusatzmodul-Anschlusseinrichtung: 4
- Küchengerät-Anschlusseinrichtung: 5
- Optischer Sender: 6
- Optischer Empfänger: 7
- Auswerteeinrichtung: 8
- Freischalteinrichtung: 9
- Speicher des elektrischen Küchengeräts: 10
- Verarbeitungsraum: 11
- Verarbeitungseinrichtung: 12
- Elektrische Energieversorgung: 13
- Speicher des Zusatzmoduls: 14
- Zentrale Steuereinheit: 15

## Patentansprüche

1. System aus einem elektrischen Küchengerät (2) und einem an das elektrische Küchengerät (2) zum Datenaustausch anschließbaren Zusatzmodul (3), wobei
das elektrische Küchengerät (2) eine Zusatzmodul-Anschlusseinrichtung (4) zum Anschließen des Zusatzmoduls (3) aufweist und
das Zusatzmodul (3) eine Küchengerät-Anschlusseinrichtung (5) zum Anschließen an das Küchengerät (2) aufweist, **dadurch gekennzeichnet, dass**
das Zusatzmodul (3) zusätzlich zu der Küchengerät-Anschlusseinrichtung (5) oder das Küchengerät (2) zusätzlich zu der Zusatzmodul-Anschlusseinrichtung (4) einen Sender (6) zum Aussenden eines Freischaltsignals aufweist und
das elektrische Küchengerät (2) zusätzlich zu der Zusatzmodul-Anschlusseinrichtung (4) bzw. das Zusatzmodul (3) zusätzlich zu der Küchengerät -Anschlusseinrichtung (4) einen Empfänger (7) zum Empfangen des von dem Sender (6) ausgesandten Freischaltsignals, eine Auswerteinrichtung (8) zum Auswerten des vom Empfänger (7) empfangenen Freischaltsignals und eine Freischalteinrichtung (9) zum Freischalten eines über die Zusatzmodul-Anschlusseinrichtung (4) und die Küchengerät-Anschlusseinrichtung (5) ablaufenden Datenaustausches zwischen dem Zusatzmodul (3) und dem elektrischen Küchengerät (2) aufweist, wobei
die Freischalteinrichtung (9) derart eingerichtet ist, dass sie den Datenaustausch zwischen dem Zusatzmodul (3) und dem elektrischen Küchengerät (2) über die Zusatzmodul-Anschlusseinrichtung (4) und die Küchengerät-Anschlusseinrichtung (5) nur dann freischaltet, wenn die Auswertung des vom Empfänger (7) empfangenen Freischaltsignals in der Auswerteeinrichtung (8) die Übereinstimmung des empfangenen Freischaltsignals mit einem vorbestimmten, in dem elektrischen Küchengerät (2) bzw. dem Zusatzmodul (3) hinterlegten Freischaltsignal ergeben hat.

2. System nach Anspruch 1, **dadurch gekennzeichnet, dass** der Sender (6) ein optischer Sender, der Empfänger (7) ein optischer Empfänger und das Freischaltsignal ein optisches Signal ist.

3. System nach Anspruch 1 oder 2, **dadurch gekennzeichnet, dass** der Sender (6) derart eingerichtet ist, dass er nur im an das elektrische Küchengerät (2) angeschlossenen Zustand des Zusatzmoduls (3) aktiv ist und ein Freischaltsignal aussenden kann.

4. System nach einem der vorherigen Ansprüche, **dadurch gekennzeichnet, dass** der Empfänger (7) derart eingerichtet ist, dass er nur im an das elektrische Küchengerät (2) angeschlossenen Zustand des Zusatzmoduls (3) aktiv ist und ein Freischaltsignal empfangen kann.

5. System nach einem der vorherigen Ansprüche, **dadurch gekennzeichnet, dass** der Sender (6) für das Aussenden eines optischen Signals im sichtbaren Spektralbereich ausgebildet und eingerichtet ist.

6. System nach einem der vorherigen Ansprüche, **dadurch gekennzeichnet, dass** der Sender (6) eine LED ist.

7. System nach einem der vorherigen Ansprüche, **dadurch gekennzeichnet, dass** als Freischaltsignal eine vorbestimmte Abfolge von Lichtimpulsen in einem bestimmten Frequenzmuster, eine vorbestimmte Abfolge von Farbwechselimpulsen oder/und eine kontinuierliche Veränderung von Frequenzmustern vorgesehen ist.

8. System nach einem der vorherigen Ansprüche, **dadurch gekennzeichnet, dass** das Zusatzmodul (3) einen Energiespeicher (13) zur elektrischen Versorgung des Senders (6) aufweist.

9. System nach einem der vorherigen Ansprüche, **dadurch gekennzeichnet, dass** das Zusatzmodul (3) eine Energieversorgungseinrichtung aufweist, mit der elektrische Energie von dem elektrischen Küchengerät (2) beziehbar ist.

10. System nach einem der vorhergehenden Ansprüche, **dadurch gekennzeichnet, dass** das elektrische Küchengerät (2) zur Herstellung von Speisen nach vorbestimmten Rezeptdaten vorgesehen ist und auf dem Zusatzmodul (3) derartige Rezeptdaten abgespeichert sind.

11. System nach einem der vorhergehenden Ansprüche, **dadurch gekennzeichnet, dass** das elektrische Küchengerät (2) zur Herstellung von Speisen nach vorbestimmten Rezeptdaten vorgesehen ist und mit dem Zusatzmodul (3) eine Verbindung zu einem externen Speicher herstellbar ist, auf dem derartige Rezeptdaten abgespeichert sind.
